# EUROPEAN PATENT APPLICATION

(11) **EP 2 045 108 A1**
(43) Date of publication of application: **08.04.2009**
(21) Application number: 07791106.3
(22) Date of filing: 20.07.2007
(51) Int. Cl.: B60H 1/32, B60H 1/00

(54) **AUTOMOBILE AIR CONDITIONER**

(30) Priority: 26.07.2006 JP 2006203343
(71) Applicant: Calsonic Kansei Corporation, Saitama-shi Saitama 331-8501 (JP)
(72) Inventor: ARAI, Kiyoshi c/o Calsonic Kansei Corporation, Saitama 331-8501 (JP)
(74) Representative: Grünecker, Kinkeldey, Stockmair & Schwanhäusser Anwaltssozietät
(86) International application number: PCT/JP2007/064369
(87) International publication number: WO 2008/013120

(57) **Abstract**

A water guide passage 7 which guides water generated by condensation on a surface of the refrigerant pipe 5 to a region downstream of the filter 4 in a case 2U is formed inside a sidewall 2Ua of the cases 2L and 2U. With this, it is possible to obtain an automobile air conditioner capable of appropriately processing, in the case, water generated by condensation on a surface of a refrigerant pipe connected to an evaporator.

## Description

### TECHNICAL FIELD

The present invention relates to an automobile air conditioner.

### BACKGROUND ART

Conventionally, there has been known an automobile air conditioner which includes, in a case, a filter for filtering air flowing through an air passage, and an evaporator disposed downstream of the filter, in which a refrigerant pipe connected to the evaporator is disposed outside the case (for example, see Japanese Patent Application Laid-open No. 2004-249944).

In the air conditioner, since the temperature of a refrigerant in the refrigerant pipe is lower than outside air around the refrigerant pipe, condensation occurs on a surface of the refrigerant pipe. Therefore, when the refrigerant pipe is disposed outside the case, the pipe surface is covered with a heat insulator in some cases as disclosed in Japanese Patent Application Laid-open No. 2004-249944, but this increases production costs.

As countermeasures against this problem, it is conceived that if the refrigerant pipe is disposed inside the case, the heat insulator can be omitted for that portion of the pipe. However, the filter is disposed at a location relatively close to the evaporator in many cases, and if water generated by condensation enters the filter, a foul smell is generated due to mold or the like in some cases.

Therefore, an object of the present invention is to achieve an automobile air conditioner capable of appropriately processing, in a case, water generated by condensation on a surface of a refrigerant pipe connected to an evaporator.

### DISCLOSURE OF INVENTION

The present invention provides an automobile air conditioner comprising, in a case, a filter which filters air flowing in an air passage, an evaporator disposed downstream of the filter, and a refrigerant pipe connected to a side of the evaporator, wherein a water guide passage for guiding water generated by condensation on a surface of the refrigerant pipe to a region downstream of the filter in the case is formed inside of a sidewall of the case.

The water guide passage can guide water to a region in the case adjacent to the evaporator.

The case can include a lower case on the downside and an upper case on the upper side, the lower case and the upper case can be integrally formed in a state where opening edges of the lower case and the upper case are butted against each other, and an inner flange portion, which is provided in a portion of the upper case where at least the water guide passage is formed, can protrudes from a position above an opening edge of the upper case toward an interior of the case from an opening edge of the lower case.

### BRIEF DESCRIPTION OF THE DRAWINGS

Fig. 1 is a perspective view of an air conditioner according to an embodiment of the present invention.
Fig. 2 is a perspective view showing a portion inside a case of the air conditioner according to the embodiment of the present invention.
Fig. 3 is a sectional view taken along a line III-III in Fig. 2.

### BEST MODE FOR CARRYING OUT THE INVENTION

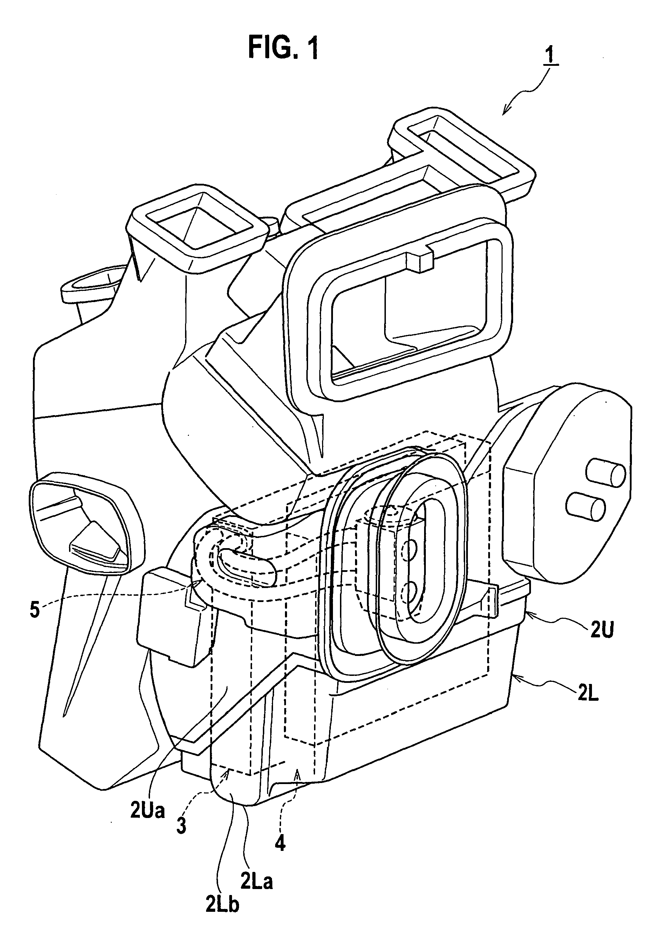

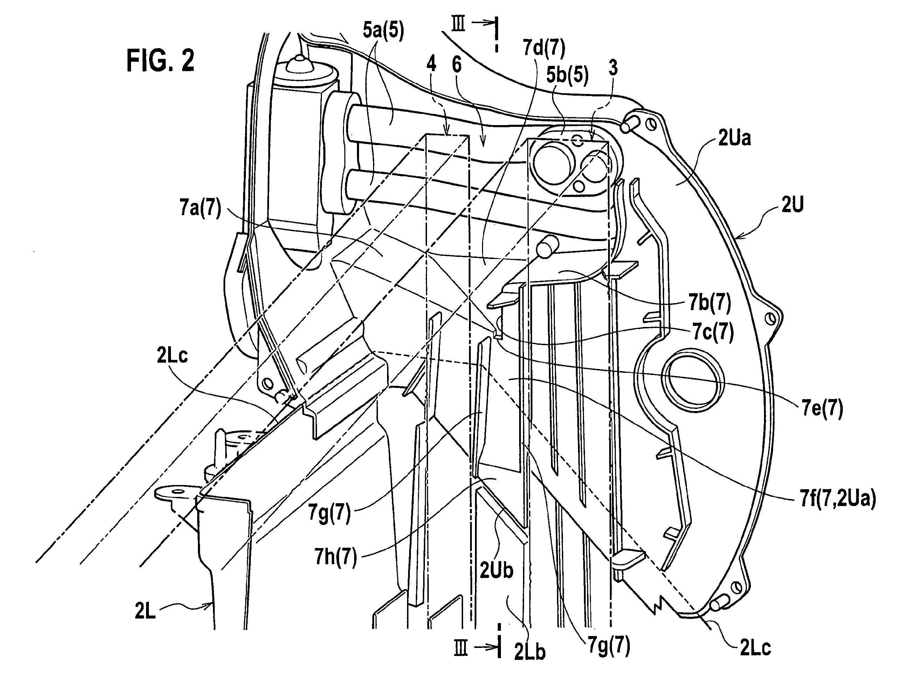

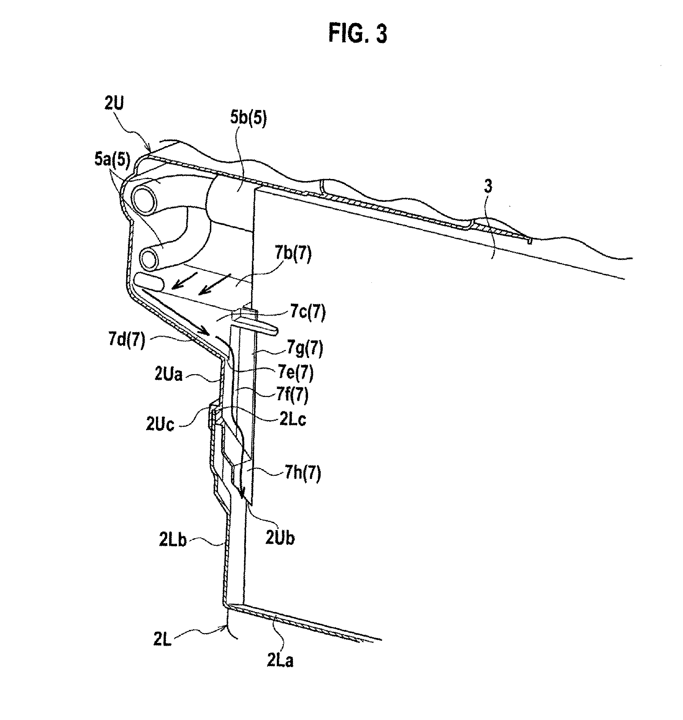

An embodiment of the present invention will be explained below in detail with reference to the accompanying drawings. Fig. 1 is a perspective view of an air conditioner according to the embodiment. Fig. 2 is a perspective view showing a portion inside a case of the air conditioner according to the embodiment. Fig. 3 is a sectional view taken along a line III-IlI in Fig. 2. Fig. 2 is a view of an inner surface of a sidewall of the case as viewed from inside of an air passage. In Fig. 2, the left side is an upstream side, and the right side is a downstream side.

According to the air conditioner 1 of the embodiment, inside of cases 2L and 2U made of synthetic resin is appropriately defined by a partition wall or the like, thereby forming an air passage. Properties such as clean degree and temperature of air can be adjusted by function parts (such as filter 4, an evaporator 3 and a heater core (not shown)) and a slide door (not shown), and blowing openings from which conditioned air issues can be changed by doors (not shown).

The cases 2L and 2U have a lower case 2L and an upper case 2U, and the lower case 2L and the upper case 2U are integrally formed in a state where opening edges 2Uc and 2Lc thereof are butted against each other. In the present embodiment, as shown in Fig. 3, a tip end edge of the opening edge 2Lc of the lower case 2L is fitted into a groove formed in the opening edge 2Uc of the upper case 2U, but the present invention is not limited to this structure.

Air discharged from a blower (not shown) passes through the filter 4 disposed in the air passage, and the air is filtered and cleaned.

The evaporator 3 forming a portion of a refrigeration cycle is provided at a rear side (downstream side) of the filter 4 so that the air can be cooled.

A region of the lower case 2L below the evaporator 3 swells downward, and a drain pan 2La is formed. Water dropping from the evaporator 3 is collected in the drain pan 2La.

A refrigerant pipe 5 is connected to the evaporator 3. In the present embodiment, the refrigerant pipe 5 includes two pipe portions 5a and 5a extending substantially in parallel to the horizontal direction, and a connector portion 5b. The refrigerant pipe 5 is disposed in the cases 2L and 2U along the inner side of the sidewall 2Ua of the upper case 2U on the side of the filter 4.

The temperature of a refrigerant in the refrigerant pipe 5 (pipe portion 5a and the connector portion 5b) is lower than outside air, and condensation occurs on the surface of the refrigerant pipe 5. In order to discharge water generated by the condensation through a predetermined path, a water guide passage 7 is formed inside the sidewalls 2Ua and 2Lb of the cases 2L and 2U.

The water guide passage 7 is formed such that water flows along inner wall surfaces of the sidewalls 2Ua and 2Lb and water is guided to a gap (i.e., a region in the cases 2L and 2U downstream of the filter 4 and adjacent to an upstream side of the evaporator 3) 6 between the filter 4 and the evaporator 3. More specifically, as shown in Fig. 2, a drop of water collecting portion 7e (groove) having a substantially U-shaped cross section and facing a gap 6 is formed in an inner surface of the sidewall 2Ua, an inclined surface 7a inclining downward from an upstream side (left side in Fig. 2) of the air passage toward a downstream side (right side in Fig. 2) on the side of the filter 4 toward the drop of water collecting portion 7e, an inclined surface 7d inclining inward and downward on the side of the filter 4 from outer side of the air passage, a curved surface 7b curving and inclining downward on the side of the evaporator 3 from a downstream side toward an upstream side, and a vertical surface 7c extending substantially vertically downward from an upstream end edge of the curved surface 7b are formed.

Ribs 7g and 7g project from an inner surface of the sidewall 2Ua of the upper case 2U upstream and downstream of the gap 6. The ribs 7g and 7g extend vertically in parallel to each other. The drop of water collecting portion 7e is disposed above a groove formed by the ribs 7g and 7g and an inner surface 7h of the sidewall 2Ua nipped between the ribs 7g and 7g. With this, water collected in the drop of water collecting portion 7e flows downward in the groove. The ribs 7g and 7g also function as support portions which support the evaporator 3.

In the present embodiment, as shown in Figs. 2 and 3, an inner flange portion 2Ub is provided on a portion of the upper case 2U where at least the water guide passage 7 is formed. The inner flange portion 2Ub protrudes from a location above the opening edge 2Uc of the upper case 2U such that the inner flange portion 2Ub separates from the opening edge 2Lc of the lower case 2L inward of the case. The inner flange portion 2Ub extends from a boundary between the opening edges 2Uc and 2Lc to a lower position. By the inner flange portion 2Ub, the flowing water is prevented from reaching the boundary, and leaking to outside of the case through the boundary. Therefore, in the present embodiment, of the inner surface of the inner flange portion 2Ub, a region (inner surface) 7h directly below an inner surface 7f forming a bottom surface of the groove is also the water guide passage. The water drops downward from the lower end edge of the inner surface 7h, and the water is collected in the drain pan 2La provided below the evaporator 3.

According to the present embodiment, water generated by condensation on the surface of the refrigerant pipe 5 is guided to a region (gap 6) downstream of the filter 4 in the cases 2L and 2U. Therefore, it is possible to prevent water from entering the filter 4, and to prevent generation of a foul smell.

According to the present embodiment, water generated by condensation on the surface of the refrigerant pipe 5 is guided to the region adjacent to the evaporator 3 in the cases 2L and 2U by means of the water guide passage 7. Therefore, water can be collected utilizing the drain pan 2La disposed below the evaporator 3, and the structure of the lower case 2L can be simplified as compared with a case where water generated by condensation is collected by another structure.

According to the present embodiment, the inner flange portion 2Ub protruding inward of the case from the opening edge 2Lc of the lower case 2L from a position above the opening edge 2Uc of the upper case 2U is provided at a portion of the upper case 2U where at least the water guide passage 7 is formed so that water flows along (the inner surface 7h of) the inner flange portion 2Ub. Therefore, water leakage from a joint between the lower case 2L and the opening edges 2Uc and 2Lc of the upper case 2U.

While a preferred embodiment of the present invention has been explained above, the present invention is not limited thereto and various modifications can be made.

### INDUSTRIAL APPLICABILITY

The present invention can be utilized for an automobile air conditioner.

## Claims

1. An automobile air conditioner comprising, in a case, a filter which filters air flowing in an air passage, an evaporator disposed downstream of the filter, and a refrigerant pipe connected to a side of the evaporator, wherein
a water guide passage for guiding water generated by condensation on a surface of the refrigerant pipe to a region downstream of the filter in the case is formed inside of a sidewall of the case.

2. The automobile air conditioner according to claim 1, wherein the water guide passage guides water to a region in the case adjacent to the evaporator.

3. The automobile air conditioner according to claim 1 or 2, wherein the case includes a lower case on the downside and an upper case on the upper side, the lower case and the upper case are integrally formed in a state where opening edges of the lower case and the upper case are butted against each other, and
an inner flange portion, which is provided in a portion of the upper case where at least the water guide passage is formed, protrudes from a position above an opening edge of the upper case toward an interior of the case from an opening edge of the lower case.
